# Europäisches Patentamt

# European Patent Office

# Office européen des brevets

(19)

(11) Veröffentlichungsnummer: **0 075 253**
**A2**

(12) ## EUROPÄISCHE PATENTANMELDUNG

(21) Anmeldenummer: **82108468.8**

(22) Anmeldetag: **14.09.82**

(51) Int. Cl.³: **B 25 J 9/00**

(30) Priorität: **21.09.81 DE 3137465**

(43) Veröffentlichungstag der Anmeldung: **30.03.83**
**Patentblatt 83/13**

(84) Benannte Vertragsstaaten: **FR GB SE**

(71) Anmelder: **SIEMENS AKTIENGESELLSCHAFT, Berlin und München Wittelsbacherplatz 2, D-8000 München 2 (DE)**

(72) Erfinder: **Altenburg, Alfred, Lachnerstrasse 55, D-8520 Erlangen (DE)**

(54) **Geschwindigkeitssteuerung für eine fernsteuerbare Transportvorrichtung.**

(57) Bei einer Geschwindigkeitssteuerung für eine fernsteuerbare Transportvorrichtung, bei der ein Aussenholm (6) über ein Drehgelenk (5) mit einem Innenholm (4) verbunden ist, der um ein festes Drehgelenk (3) drehbar ist, sind für den Innenholm (4) und Aussenholm (6) jeweils mit einer Drehwinkelregeleinrichtung (10, 11) ausgerüstete Antriebe vorgesehen, wobei Steuersignale für den Drehwinkel ($\alpha$) des Innenholms (4) und den Drehwinkel ($\beta$) des Aussenholms (6) von einem Rechner (12) vorgegeben werden. Dem Rechner (12) werden durch einen Steuerhebel (13a) an einem Sollwertsteller (13) einstellbare Signale zugeführt. Der Sollwertsteller (13) besitzt einen Geber (14) zur Vorgabe eines der Geschwindigkeit ($v_L$) proportionalen Signals und eines dem Richtungswinkel ($\varepsilon$ bzw. $\delta$) proportionalen Signals an den Rechner (12). Dabei wird der Richtungswinkel ($\varepsilon$ bzw. $\delta$) durch eine feste Gerade oder die Achse des Aussenholms (6) und einer Geraden gebildet, die durch eine Verbindungslinie (16) zwischen dem Zielpunkt (17) und dem Ende (7) des Aussenholms (6) gegeben ist.

SIEMENS AKTIENGESELLSCHAFT          Unser Zeichen
Berlin und München                  VPA 81 P 3 1 4 4 E

Geschwindigkeitssteuerung für eine fernsteuerbare
Transportvorrichtung

Die Erfindung bezieht sich auf eine Geschwindigkeitssteuerung für eine fernsteuerbare Transportvorrichtung der im Oberbegriff des Anspruches 1 genannten Art.

Aus der französischen Patentschrift 20 65 598 ist eine Regeleinrichtung bekannt, die die Bewegung eines am Ende einer dreigelenkigen Stellvorrichtung angebrachten Werkzeuges steuert. Die Gelenkarme sind dabei mittels Antrieben einstellbar, die je mit einer Drehwinkelregeleinrichtung ausgerüstet sind. Eine gewünschte geradlinige Bewegung des Werkzeuges wird mittels der Winkelsollwerte der einzelnen Gelenkarme errechnet. Durch Vorgabe des Winkelsollwertes des inneren Gelenkarmes mittels eines Steuerhebels werden die Winkelwerte der anderen Gelenkarme abhängig von den Längen der Gelenkarme, den Werten der Winkel zu Beginn jedes Bewegungsvorganges und dem senkrechten Abstand von dem Drehpunkt des ersten Gelenkarmes zu dem Werkzeug berechnet. Mit der bekannten Einrichtung ist es möglich, den Drehwinkel des Innenholms entsprechend der Auslenkung des Steuerhebels einzustellen. Dabei ergeben sich aber für Auslenkungen des Steuerhebels um gleiche Beträge entlang des Weges des Werkzeuges unterschiedliche Bewegungsgeschwindigkeiten. Es ist daher sehr schwierig, das Werkzeug auf der gesamten Weggeraden mit einer vorgegebenen Geschwindigkeit zu steuern.

Nr 2 Ts /16.09.1981

0075253

Der Erfindung liegt die Aufgabe zugrunde, eine Steuereinrichtung anzugeben, mit der bei einer Transportvorrichtung eine vorgegebene Geschwindigkeit einstellbar ist und die Bewegungsrichtung in einfacher Weise durch die Richtung der Auslenkung des Steuerhebels vorgebbar ist.

Diese Aufgabe wird erfindungsgemäß durch die im kennzeichnenden Teil des Anspruches 1 bzw. 2 angegebenen Maßnahmen gelöst.

Da bei der erfindungsgemäßen Steuereinrichtung die Richtung der Auslenkung des Steuerhebels der Zielrichtung und die Größe der Auslenkung der Geschwindigkeit des Endes der Transporvorrichtung entspricht, wird die Bedienung der fernsteuerbaren Transportvorrichtung wesentlich erleichtert.

In der Zeichnung sind drei Ausführungsbeispiele der Erfindung schematisch dargestellt. Es zeigt:

Fig. 1 eine Positioniersteuerung eines zweiteiligen Förderbandes für Schüttgut oder dergleichen,

Fig. 2 einen Teil der Geschwindigkeitssteuereinrichtung mit schematisch dargestelltem Sollwertsteller,

Fig. 3 eine schematische Darstellung der aneinandergereihten Förderbänder in einem Koordinatensystem,

Fig. 4 eine Steuereinrichtung zur Vorgabe der Positioniergeschwindigkeit eines Fräsers für Übertageabbau,

Fig. 5 eine Geschwindigkeitssteuereinrichtung für eine Stellvorrichtung für einen Gegenstand, der sich in einem für Personen nicht zugänglichen Raum befindet und

Fig. 6 eine schematische Darstellung eines Sollwertstellers für die Geschwindigkeitssteuerung gemäß Fig. 5.

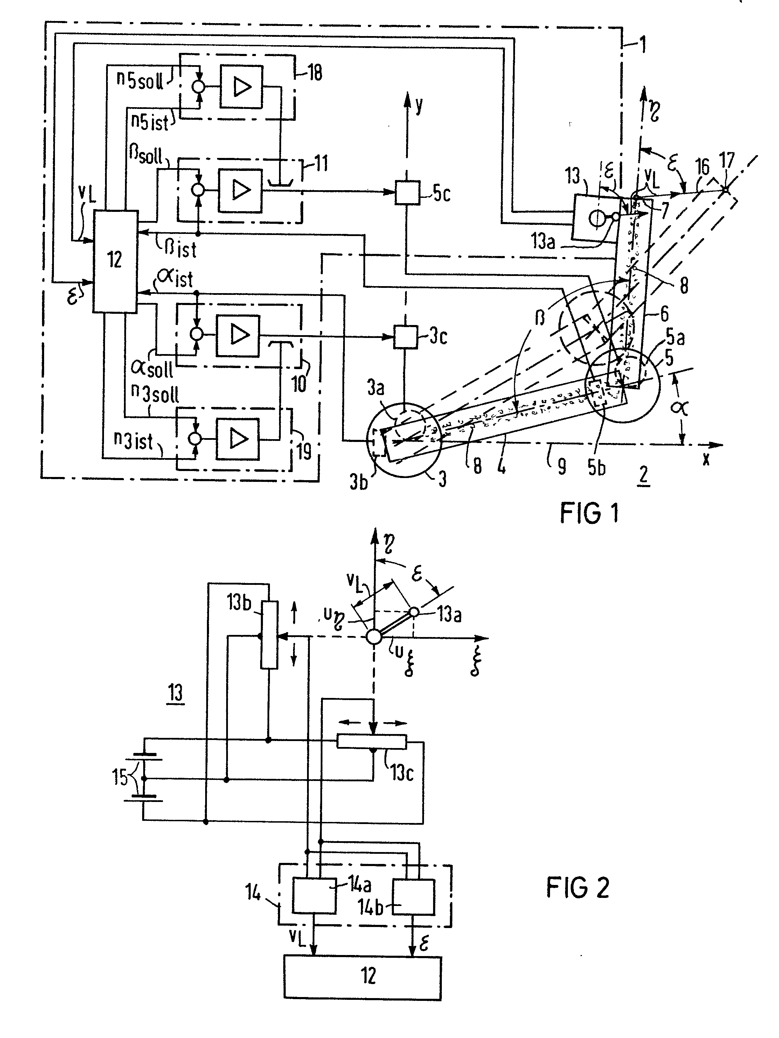

In Fig. 1 ist mit 1 eine Steuereinrichtung zur Vorgabe der Positioniergeschwindigkeit einer Transportvorrichtung bezeichnet, die als zweiteiliges Förderband 2 für Schüttgut 8 oder dergleichen ausgebildet ist. Dieses Förderband 2 besitzt einen an einem festen Drehgelenk 3 gelagerten Innenholm 4 mit einem endlosen Transportband zur Aufnahme des Schüttgutes 8. An dem Innenholm 4 ist über ein Dreh/gelenk 5 ein Außenholm 6 drehbar gelagert, der ebenfalls mit einem endlosen Transportband versehen ist. Der Innenholm 4 ist im festen Drehgelenk 3 durch eine nicht dargestellte Hubvorrichtung in der Höhe verstellbar. Am Ende 7 des Außenholms 6 wird das Schüttgut 8 abgegeben. Dabei soll das Ende 7 des Außenholms 6 mit einer vorgebbaren Geschwindigkeit auf einem vorgebbaren Weg, z.B. einer Geraden 16, bewegt werden. Hierzu ist für den Innenholm 4 und Außenholm 6 je ein mit einem Elektromotor ausgerüstetes Drehwerk 3a bzw. 5a vorgesehen. Zum Erfassen des Drehwinkels $\alpha$ des Innenholms gegenüber einer Bezugslinie 9 dient ein Winkelgeber 3b. Der Winkel $\beta$ zwischen Innenholm und Außenholm wird durch einen Winkelgeber 5b erfaßt.

Zur Steuerung des Drehwerksantriebes 3a ist eine Drehwinkelregeleinrichtung 10 vorgesehen, der ein Winkelsollwertsignal $\alpha_{soll}$ und ein Winkelistwertsignal $\alpha_{ist}$ zugeführt wird. In analoger Weise ist dem Drehwerksantrieb 5a eine Drehwinkelregeleinrichtung 11 zugeordnet, der ein Winkelsollwertsignal $\beta_{soll}$ und ein Winkelistwertsignal $\beta_{ist}$ zugeleitet werden. Die Ausgänge der Drehwinkeleinrichtungen 10 bzw. 11 sind mit Stellvorrichtungen 3c bzw. 5c der Drehwerksantriebe verbunden. Die Winkelsollwertsignale $\alpha_{soll}$ und $\beta_{soll}$ werden in einem Rechner 12 gebildet, dem die Drehwinkelistwerte $\alpha_{ist}$ und $\beta_{ist}$ sowie durch einen Steuerhebel 13a an einem Sollwertsteller 13 einstellbare Steuerwerte zugeführt werden. Der Sollwersteller 13 mit dem Steuerhebel 13a ist in einer Kabine angeordnet, die am Außenholm 6 angebracht ist. Er besitzt - wie Fig. 2 schematisch zeigt - räumlich um 90° versetzt angeordnete, von einer Konstantstromquelle 15 gespeiste Potentiometer 13b, 13c zum Bilden von Signalen $u_\xi$, $u_\eta$, die dem Betrag und der Auslenkung in der $\xi$ - und $\eta$-Richtung eines rechtwinkligen Koordinatensystems proportional sind. Die Ausgänge der Potentiometer 13b, 13c sind mit Rechnerbausteinen 14a eines Gebers 14 zum Lösen der Beziehung

$$v_L = k \cdot \sqrt{u_\xi^2 + u_\eta^2}$$

und mit Rechnerbausteinen 14b des Gebers 14 zum Lösen der Beziehung

$$\varepsilon = \arctan \frac{u_\xi}{u_\eta}$$

verbunden. Dabei ist

$v_L$ die Positioniergeschwindigkeit des Endes der Transportvorrichtung,

k eine Konstante,

$u_\xi$ bzw. $u_\eta$ die durch Auslegen des Steuerhebels in der $\xi$ - bzw. $\eta$-Richtung entstehende Spannungskomponente und

$\varepsilon$ ein Richtungswinkel, der durch die bewegliche $\eta$-Achse und eine Gerade gebildet wird, die durch eine Verbindungslinie 16 zwischen Zielpunkt 17 und Ende 7 des Außenholms 6 gegeben ist (Fig. 1).

Die Signale $v_L$ und $\varepsilon$ werden dem Rechner 12 zugeführt. Dort werden Drehzahlsteuersignale $n_{3soll}$, $n_{3ist}$ sowie $n_{5ist}$ und $n_{5soll}$ gebildet. Die betreffenden Steuerwerte werden Drehzahlreglern 18, 19 zugeleitet, deren Ausgänge auf die Begrenzung der Drehwinkelregeleinrichtungen 10 bzw. 11 geschaltet sind.

In Fig. 1 ist angenommen, daß der Innenholm 4 und Außenholm 6 in einer zumindest annähernd horizontalen Ebene drehbar angeordnet sind. Um das Ende 7 des Außenholms 6 von der dargestellten Position geradlinig in die gestrichelte Position zu bringen, müssen die Holme 4 und 6 Drehungen um ihre Drehgelenke 3 und 5 mit bestimmten Winkelgeschwindigkeiten abhängig von den jeweiligen Drehwinkeln $\alpha$ und $\beta$ sowie von der Größe und Richtung der Geschwindigkeit $v_L$ des Endes des Transportbandes ausführen.

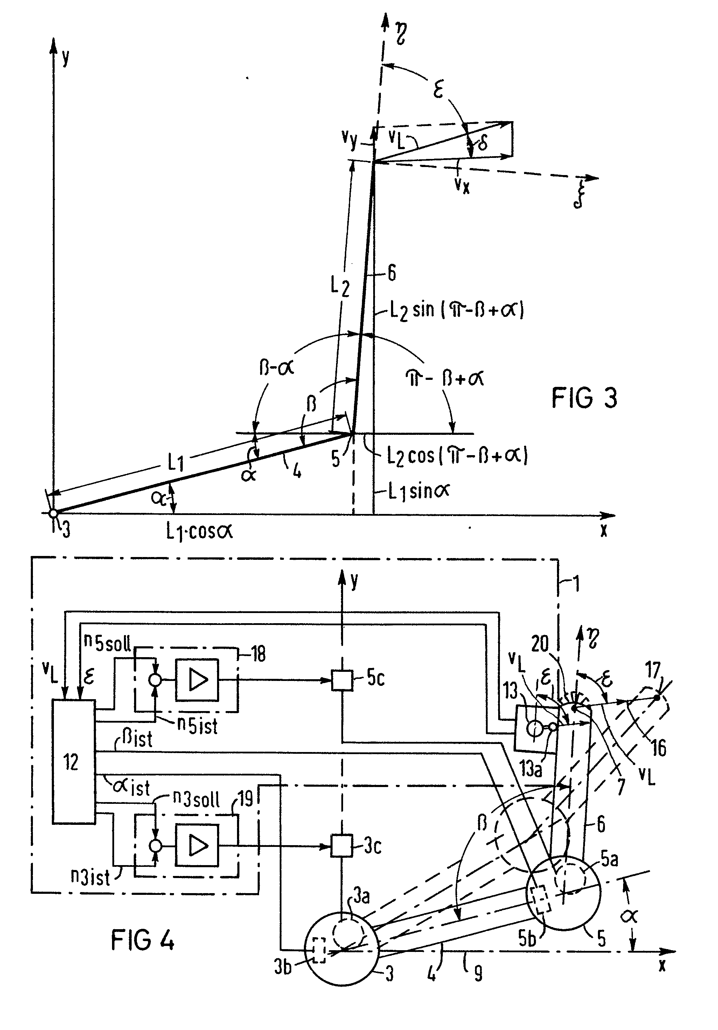

Aus der in Fig. 3 schematisch dargestellten Anordnung der Holme 4 und 6 in einem rechtwinkligen Koordinatenkreuz $x$, $y$ lassen sich die nachstehenden Beziehungen ableiten. Dabei ist das feste Drehgelenk 3 in den Nullpunkt des Koordinatenkreuzes gelegt.worden.

$$x = L_1 * \cos\alpha + L_2 * \cos(\pi - \beta + \alpha)$$
$$y = L_1 * \sin\alpha + L_2 * \sin(\pi - \beta + \alpha)$$

Führt man für $\sin(\pi - \beta + \alpha) = \sin(\beta - \alpha)$ und für $\cos(\pi - \beta + \alpha) = -\cos(\beta - \alpha)$ ein, so ergibt sich

$$x = L_1 * \cos\alpha - L_2 * \cos(\beta - \alpha), \qquad (1)$$

$$y = L_1 * \sin\alpha + L_2 * \sin(\beta - \alpha). \qquad (2)$$

Wird das Ende des Außenholms mit der Geschwindigkeit $v_L$ in Richtung $\delta$ bewegt, so betragen die Geschwindigkeitskomponenten in X- und Y-Richtung

$$v_x = v_L * \cos\delta \quad \text{und} \qquad (3)$$

$$v_y = v_L * \sin\delta. \qquad (4)$$

Durch Differenzieren der Beziehungen (1) und (2) nach der Zeit erhält man für $v_x$ und $v_y$ die Beziehungen

$$v_x = \frac{dx}{dt} = -L_1 * \sin\alpha * \frac{d\alpha}{dt} + L_2 * \sin(\beta - \alpha) * \left(\frac{d\beta}{dt} - \frac{d\alpha}{dt}\right), \quad (5)$$

$$v_y = \frac{dy}{dt} = L_1 * \cos\alpha * \frac{d\alpha}{dt} + L_2 * \cos(\beta - \alpha) * \left(\frac{d\beta}{dt} - \frac{d\alpha}{dt}\right). \quad (6)$$

Setzt man für $v_x$ und $v_y$ die Beziehungen (3) und (4) ein, so ergibt sich:

$$\frac{d\alpha}{dt} = -v_L * \cos(\delta + \beta - \alpha)/(L_1 * \sin\beta), \qquad (7)$$

$$\frac{d\beta}{dt} = v_L * (L_1 * \cos(\delta - \alpha) - L_2 * \cos(\delta + \beta - \alpha))/(L_1 * L_2 * \sin\beta). \qquad (8)$$

Setzt man noch

$$\omega_{3soll} = \frac{d\alpha}{dt} \quad \text{und} \quad \omega_{5soll} = \frac{d\beta}{dt},$$

so erhält man mit $\omega = 2 * \pi * n$, wobei n Umdrehungen/Zeit bedeutet,

$$n_{3soll} = -30 * v_L * \cos(\delta + \beta - \alpha)/(\pi * L_1 * \sin\beta), \qquad (9)$$

$$n_{5soll} = 30 * v_L * (L_1 * \cos(\delta - \alpha) - L_2 * \cos(\delta + \beta - \alpha))/(\pi * L_1 * L_2 * \sin\beta). \qquad (10)$$

Dabei sind $n_{3soll}$, $n_{5soll}$ die Soll-Drehzahlen des Drehwerkes 3a bzw. 5a.

Bei einer Bewegung des Endes 7 des Außenholms 6 in der horizontalen Ebene in Richtung des Geschwindigkeitsvektors $v_L$ mit dem Winkel $\delta$ und mit der Geschwindigkeit $v_L$ müssen für jede Zwischenstellung der Holme 4 und 6 durch die Winkelgeber 3b und 5b die Meßwerte der Winkel $\alpha$ und $\beta$ vorliegen. Mit Hilfe des Rechners 12 lassen sich entsprechend den Beziehungen (9) und (10) die Sollwerte für die Drehzahlen $n_{3soll}$ und $n_{5soll}$ bestimmen. Zum Positionieren des Endes 7 des Außenholms 6 wird von einer Bedienungsperson der Stellhebel 13a in einer Richtung ausgelenkt, die parallel zu einer Linie (16) liegt, welche durch das Ende 7 des Außenholms und den Zielpunkt 17 gegeben ist. Im Rechner 12 wird der dadurch vorgegebene Weg stückweise (z.B. für ein Wegstück von 10 cm) vorausberechnet. Dies kann vorzugsweise proportional der Geschwindigkeit $v_L$ vorgenommen werden. Die Vorausberechnung erfolgt ausgehend von den augenblicklichen Drehwinkeln $\alpha = \alpha_{ist}$ und $\beta = \beta_{ist}$. Zunächst wird

$$\delta = \pi + \alpha - \beta - \varepsilon \qquad (11)$$

berechnet, dann nach den Beziehungen (7) und (8) die Winkelgeschwindigkeiten $\frac{d\alpha}{dt}$ und $\frac{d\beta}{dt}$. Daraus werden die neuen Zwischenwinkel

$$\alpha_{neu} = \alpha + \frac{d\alpha}{dt} * dt \qquad (12)$$

sowie

$$\beta_{neu} = \beta + \frac{d\beta}{dt} * dt \qquad (13)$$

ermittelt, die solange aufsummiert werden, bis das vorgegebene Wekstück (von z.B. 10 cm) erteilt ist und als Sollwerte $\alpha_{soll}$ und $\beta_{soll}$ den Winkelreglern 10 und 11 vorgegeben werden. Für die nächsten Wegstücke erfolgt die Berechnung und Vorgabe der Sollwerte analog.
Die in Fig. 1 gezeigte Regelung ist mit besonderem Vorteil für Regelkreise mit großen Zeitkonstanten einsetzbar.

Bei der in Fig. 4 gezeigten Steuereinrichtung für die Positioniergeschwindigkeit eines Fräsers 20 werden entsprechend einer Auslenkung des Steuerhebels 13a im Rechner 12 mit Hilfe der Beziehungen (9) und (10) die Drehzahlsollwerte $n_{3soll}$ und $n_{5soll}$ berechnet und an die Drehzahlregler 18, 19 gegeben, deren Ausgangssignale die Drehwerksantriebe 3a und 5a entsprechend steuern. Die Anordnung hat den Vorteil, daß die Steuerung einfach aufgebaut ist und sich daher insbesondere für kleinere Anlagen anbietet. Sie ist für Regelkreise mit kleinen Zeitkonstanten besonders geeignet.

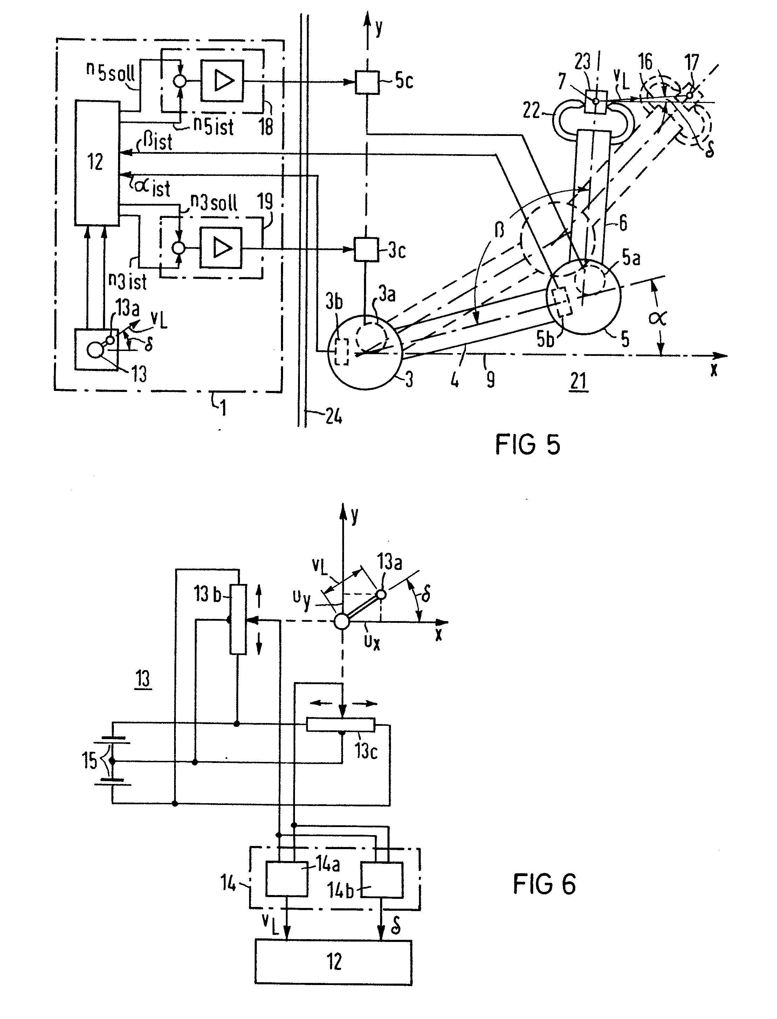

Bei der in Fig. 5 gezeigten Geschwindigkeitssteuerein-richtung für eine fernsteuerbare Transportvorrichtung 21 ist am Ende eines Außenholms 6 eine Greifvorrichtung 22 für einen zu transportierenden Gegenstand 23 angeordnet. Der Sollwertsteller 13 mit dem Steuerhebel 13a ist außerhalb des Raumes 24 angeordnet. Er besitzt - wie in Fig. 6 schematisch dargestellt - räumlich um 90° versetzt angeordnete, von einer Konstantstromquelle 15 gespeiste Potentiometer 13b, 13c zum Bilden von Signalen $u_x$, $u_y$, die dem Betrag und der Auslenkung in der x- und y-Richtung eines rechtwinkligen Koordinatensystems proportional sind. Die Ausgänge der Potentiometer 13b, 13c sind mit Rechnerbausteinen 14a eines Gebers 14, zum Lösen der Beziehung

$$v_L = k \cdot \sqrt{u_x^2 + u_y^2}$$

und mit Rechnerbausteinen 14b des Gebers 14 zum Lösen der Beziehung

$$\delta = \arctan \frac{u_y}{u_x}$$

verbunden. Dabei ist
$v_L$ die Positioniergeschwindigkeit des Endes der Transportvorrichtung,
k eine Konstante,
$u_x$ bzw. $u_y$ die durch Auslegen des Steuerhebels in der x- bzw. y-Richtung entstehende Spannungskomponente und
$\delta$ ein Richtungswinkel, der durch die feste x-Achse und eine Gerade gebildet wird, die durch eine Verbindungslinie 16 zwischen Zielpunkt 17 und Ende 7 des Außenholms 6 gegeben ist.
Die Signale $v_L$ und $\delta$ werden dem Rechner 12 zugeführt. Dort werden Drehzahlsteuersignale $n_{3soll}$, $n_{3ist}$ sowie $n_{5ist}$ und $n_{5soll}$ gebildet. Die betreffenden Steuerwerte werden Drehzahlreglern 18, 19 zugeleitet, deren Ausgänge auf die Stellvorrichtung 3c bzw. 5c der Drehwerks-Antrie-

0075253

- 9 -     VPA 81 P 3 1 4 4 E

be geschaltet sind. Bei der vorgenannten Ausführung
wird die Längsachse des Außenholms 6 relativ gegen das
Achsensystem des Sollwertstellers 13 gedreht.


6 Figuren
2 Patentansprüche

Bezugszeichenliste

| | |
|---|---|
| 1 | Steuereinrichtung |
| 2 | Förderband |
| 3 | Drehgelenk |
| 3a | Drehwerk |
| 3b | Winkelgeber |
| 3c | Stellvorrichtung |
| 4 | Innenholm |
| 5 | Drehgelenk |
| 5a | Drehwerk |
| 5b | Winkelgeber |
| 5c | Stellvorrichtung |
| 6 | Außenholm |
| 7 | Endes des Außenholms |
| 8 | Schüttgut |
| 9 | Bezugslinie |
| 10 | Drehwinkelregeleinrichtung |
| 11 | Drehwinkelregeleinrichtung |
| 12 | Rechner |
| 13 | Sollwertsteller |
| 13a | Steuerhebel |
| 13b | Potentiometer |
| 13c | Potentiometer |
| 14 | Geber |
| 14a | Rechnerbaustein |
| 14b | Rechnerbaustein |
| 15 | Batterie |
| 16 | Verbindungslinie |
| 17 | Zielpunkt |
| 18 | Drehzahlregler |
| 19 | Drehzahlregler |
| 20 | Fräser |
| 21 | Transportvorrichtung |
| 22 | Greifvorrichtung |
| 23 | Gegenstand |
| 24 | Raum |

$\alpha_{soll}$, $\beta_{soll}$ - Winkelsollwertsignal

$\alpha_{ist}$, $\beta_{ist}$ - Winkelistwertsignal

$\varepsilon$ Richtungswinkel

$v_L$ Geschwindigkeit

$\delta$ Richtungswinkel

## Patentansprüche

1. Geschwindigkeitssteuerung für eine fernsteuerbare Transportvorrichtung, bei der ein Außenholm (6) über ein Drehgelenk (5) mit einem Innenholm (4) verbunden ist, welcher um ein feststehendes Drehgelenk (3) drehbar ist, wobei für den Innenholm (4) und Außenholm (6) mit je einer Drehwinkelregeleinrichtung ausgerüstete Antriebe vorgesehen sind und zur Vorgabe eines Steuersignals für den Drehwinkel ($\alpha$) des Innenholms (4) und für den Drehwinkel ($\beta$) des Außenholms (6) an die Drehwinkelregeleinrichtungen ein Rechner (12) vorgesehen ist, dem die Drehwinkelistwerte ($\alpha$ und $\beta$) und Steuerwerte über einen durch einen Steuerhebel (13a) einstellbaren Sollwertsteller (13) zugeführt werden, d a d u r c h   g e k e n n z e i c h n e t , daß der Sollwertsteller (13) um $90^{\circ}$ räumlich versetzte Potentiometer (13b, 13c) zum Bilden von Signalen ($u_{\xi}$ , $u_{\eta}$) besitzt, die dem Betrag und der Auslenkung in der $\xi$ - und $\eta$ -Richtung eines Koordinatensystems proportional sind und daß die Ausgänge der Potentiometer (13b, 13c) mit einem Geber (14) mit Rechnerbausteinen (14a) zum Lösen der Beziehung

$$v_L = k \cdot \sqrt{u_{\xi}^2 + u_{\eta}^2}$$

und mit Rechnerbausteinen (14b) zum Lösen der Beziehung

$$\mathcal{E} = \arctan \frac{u_{\xi}}{u_{\eta}}$$

verbunden sind, wobei $v_L$ die Positioniergeschwindigkeit des Endes (7) der Transportvorrichtung, k eine Konstante, $u_{\xi}$ bzw. $u_{\eta}$ eine durch Auslegen des Steuerhebels (13a) in der $\xi$- bzw. $\eta$-Richtung entstehende Spannungskomponente und $\mathcal{E}$ ein Richtungswinkel ist, der durch die bewegliche Achse des Außenholms (6) und eine Gerade gebildet wird, die durch eine Verbindungslinie (16) zwischen Zielpunkt (17) und Ende (7) des Außenholms (6) gegeben ist.

2. Geschwindigkeitssteuerung für eine fernsteuerbare Transportvorrichtung, bei der ein Außenholm (6) über ein Drehgelenk (5) mit einem Innenholm (4) verbunden ist, welcher um ein feststehendes Drehgelenk (3) drehbar ist, wobei für den Innenholm (4) und Außenholm (6) mit je einer Drehwinkelregeleinrichtung ausgerüstete Antriebe vorgesehen sind und zur Vorgabe eines Steuersignals für den Drehwinkel ($\alpha$) des Innenholms (4) und für den Drehwinkel ($\beta$) des Außenholms (6) an die Drehwinkelregeleinrichtungen ein Rechner (12) vorgesehen ist, dem die Drehwinkelistwerte ($\alpha$ und $\beta$) und Steuerwerte über einen durch einen Steuerhebel (13a) einstellbaren Sollwertsteller (13) zugeführt werden, d a d u r c h  g e k e n n z e i c h n e t , daß bei Ausbildung der Drehwinkelregeleinrichtung als Drehzahlregeleinrichtung (18 bzw. 19) der Sollwertsteller (13) um 90$^{\circ}$ räumlich versetzte Potentiometer (13b, 13c) zum Bilden von Signalen ($u_x$, $u_y$) besitzt, die dem Betrag und der Auslenkung in der x- und y-Richtung eines Koordinatensystems proportional sind und daß die Ausgänge der Potentiometer (13b, 13c) mit einem Geber (14) mit Rechnerbausteinen (14a) zum Lösen der Beziehung

$$v_L = k \cdot \sqrt{u_x^2 + u_y^2}$$

und mit Rechnerbausteinen (14b) zum Lösen der Beziehung

$$\delta = \arctan \frac{u_y}{u_x}$$

verbunden sind, wobei $v_L$ die Positioniergeschwindigkeit des Endes der Transportvorrichtung, k eine Konstante, $u_x$ bzw. $u_y$ eine durch Auslegen des Steuerhebels in der x- bzw. y-Richtung entstehende Spannungskomponente und $\delta$ ein Richtungswinkel ist, der durch die feste x-Achse und eine Gerade gebildet wird, die durch eine Verbindungslinie (16) zwischen Zielpunkt (17) und Ende (7) des Außenholms (6) gegeben ist.

0075253
81 P 3144

FIG 1

FIG 2

FIG 3

FIG 4

FIG 5

FIG 6

0075253
81 P 3144